(19) Europäisches Patentamt
European Patent Office
Office européen des brevets

(11) EP 2 353 734 A2

(12) EUROPEAN PATENT APPLICATION

(43) Date of publication:
10.08.2011 Bulletin 2011/32

(51) Int Cl.:
*B05C 17/01* (2006.01)

(21) Application number: 11153470.7

(22) Date of filing: 07.02.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 10.02.2010 US 703471

(71) Applicant: Prince Castle Inc.
Carol Stream IL 60188 (US)

(72) Inventors:
• Veltrop, Loren
Chicago, IL 60605 (US)
• Schmidt, Eric
Forest Park, IL 60130 (US)

• Rote, Scott
New Lenox, IL 60451 (US)
• Somen, Daniel
Chicago, IL 60607 (US)
• Van Erden, Donald
Grayslake, IL 60030 (US)
• Kurth, Mark
Chicago, IL 60622 (US)
• Eiger, Aaron
Chicago, IL 60613 (US)
• Payne, Timothy
Chicago, IL 60622 (US)

(74) Representative: Giver, Sören Bo
Awapatent AB
Box 1066
251 10 Helsingborg (SE)

(54) **Rodless dispenser for extrudable materials and having a contents indicator**

(57) A push chain (24) is used to drive a piston (26) into a canister (21) of extrudable material. The push chain is stored in an elongated chain magazine (32), withdrawn from the magazine and into the canister by actuation of a trigger (16) connected to a sprocket (22) for the chain. The push chain exerts a compressive force on a piston rod connected to a piston at a point offset from the center line of the piston, causing the piston to rotate to lock the push chain. The amount of material remaining in a tube of extrudable material is enunciated by way of a content indicator driven by the push chain.

FIG. 9

EP 2 353 734 A2

## Description

### RELATED APPLICATIONS

This application is a continuation-in-part of U.S. patent application number 12/684,597, which was filed January 8, 2010, and which is entitled Rodless Dispenser.

### BACKGROUND

Mechanical dispensers for viscous or extrudable materials include common, piston-type caulking guns found in any hardware store as well as small, hand-held devices for rolling up a flexible tube, such as the tubes that dispense toothpaste. Most extrudable material dispensers employ a piston attached to one end of an elongated piston rod. The piston is advanced through a partial-cylinder the shape of which is reminiscent of a trough and which is hereafter referred to as a holding cylinder or simply cylinder, the function of which is to hold a cylindrical canister of extrudable material.

Extrudable material in a canister is forced from the canister through a canister tip by driving a canister-internal piston installed into the "bottom" of the canister. The piston in the bottom of canister is hereafter referred to as a canister piston.

The canister piston drives extrudable material from the canister when the canister piston is driven through the canister by the piston attached to the piston rod. The piston rod is driven by a pistol grip mechanism that forms part of the dispenser. The pistol grip mechanism can be attached to either a ratcheting or ratchet-less transmission device. Actuation of the pistol grip causes the piston rod to be advanced into the cylinder, which in turn drives the first piston (attached to the connecting rod) into the second piston, (in the bottom of a canister of extrudable material) forcing extrudable material from the dispensing tube. As the first piston moves away from the transmission device and into the dispensing tube, extrudable material is forced from the tip of the canister.

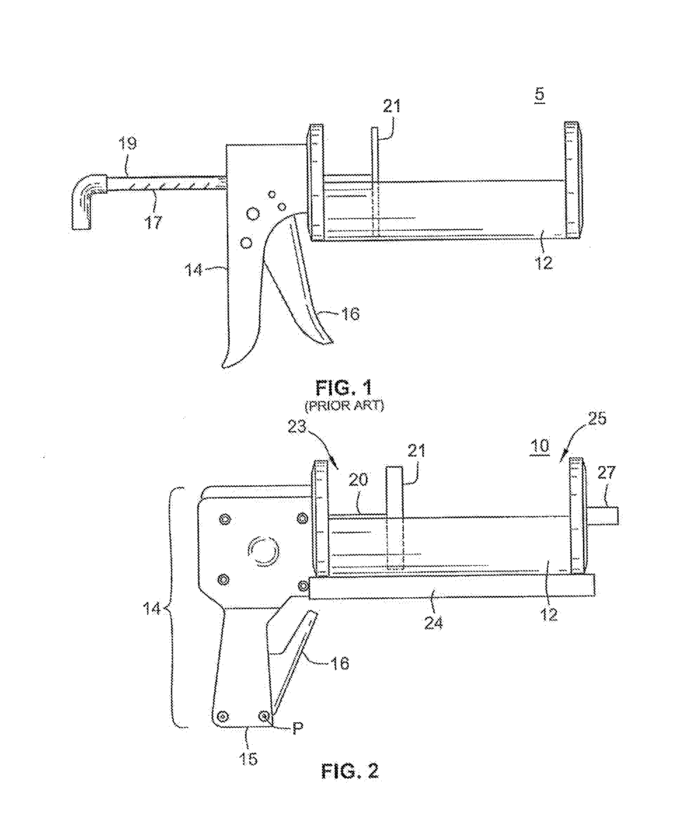

FIG. 1 displays a side view of a typical prior art extrudable material dispenser described above. The first piston 21 in the cylinder is urged against the canister piston in the tube of extrudable material by operating the trigger 16, which is rotatably mounted in the handle 14, Grooves or teeth 17, formed in the elongated push rod 19 are engaged by a ratchet mechanism inside the handle 14 and not shown. The ratchet mechanism can be considered to be a "transmission'" that converts the force applied to the trigger 16 into lateral displacement of the piston rod and first piston 21.

A problem with prior art caulking guns or other dispensers for extrudable materials is that the push rod 19 extends outwardly from the handle 14, which makes the dispenser unwieldy. The extended rod also makes the device difficult to store or set down between uses, especially when such devices are used in close quarters, as often happens when the devices are used in restaurants to dispense condiments and other extrudable food products.

A dispenser for dispensing extrudable material which eliminates the push rod 19 would be an improvement over the prior art.

### BRIEF DESCRIPTION OF THE DRAWINGS

FIG. 1 is a side view of a prior art extrudable material dispenser;

FIG. 2 is a side view of a rodless dispenser for extrudable materials;

FIG. 3A is a right-side cutaway of the dispenser shown in FIG. 2;

FIG. 3B is a right-side cutaway of an alternate embodiment of the dispenser shown in FIG. 2;

FIG. 4 is a left-side cutaway of the dispenser shown in FIG. 2;

FIG. 5A, 5B, 5C are isolated views of the trigger, sprocket and ratchet mechanism and push chain used in the device shown in FIG. 2;

FIG. 6A and 6B are isolated views of a ratchet mechanism;

FIG. 7 is an end view of the device shown in FIG. 2;

FIG. 8 is a perspective view of the left-hand side of a preferred embodiment of a rodless dispenser having a contents indicator;

FIG. 9 is a perspective view of the right-hand side of the rodless dispenser depicted in FIG. 8;

FIG. 10 is an exploded view of the rodless dispenser for extrudable material shown in FIG. 8 and FIG. 9;

FIG. 11 is a side view of another embodiment of a rodless dispenser having a contents indicator;

FIG. 12 is a side view of the alternate embodiment shown in FIG. 11

FIG. 13 is a cut-away perspective view of the dispenser shown in FIGS. 11 and 12; and

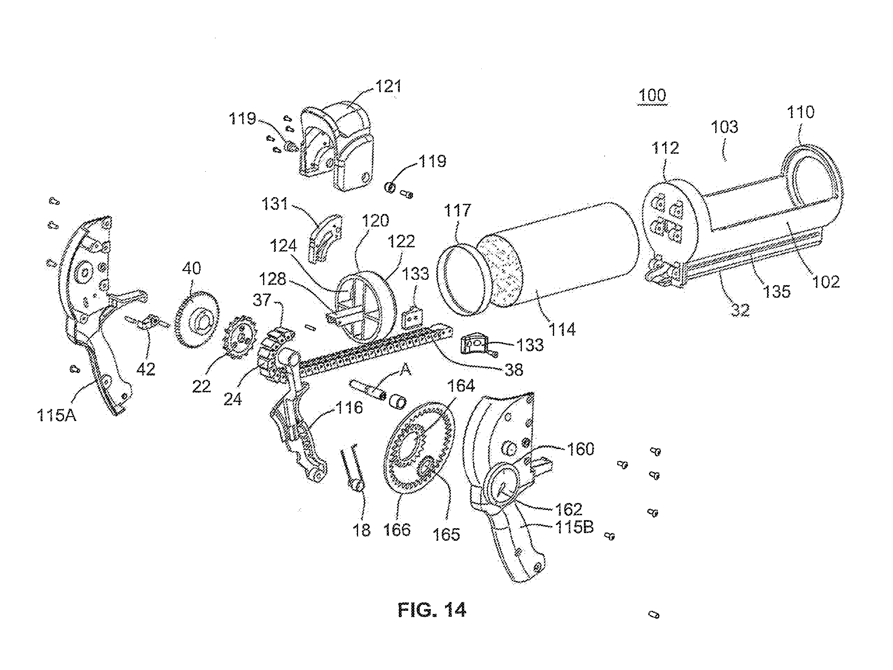

For the sake of completeness, FIG. 14 is an exploded view of the rodless dispenser depicted in FIGS, 11,12 and 13.

### DETAILED DESCRIPTION

FIG. 2 is a side view of a rodless dispenser 10 for dispensing extrudable materials by hand. The dispenser 10 is comprised of a cylinder 12, formed without a top "half in order to allow tubes or canisters of extrudable materials to be inserted into and removed from the dispenser 10. The "half-cylinder" 12 for holding tubes or canisters is nevertheless referred to herein as a cylinder.

A housing, which acts as a handle 14, is attached to, or integrally formed as part of the cylinder 12. A lower or bottom end of a reciprocating trigger 16 is pivotally attached to the lower or bottom end 15 of the handle 14 at a pivot point P. When the trigger 16 is squeezed, it slides into the handle 14 where a trigger return spring, not visible in FIG. 2,is compressed when the trigger 16 is squeezed. Tension in the trigger return spring causes the trigger 16 to return to its starting position (exit from the handle 14) when a user releases the trigger 16. The trigger 16 can thus be cyclically squeezed and released.

Squeezing the trigger 16, drives a chain sprocket within the handle 14 on a bearing supported by the handle. A push chain, which is wrapped part way around the sprocket, is used to exert a force against a piston 26 in the cylinder 12 when the sprocket is rotated by the trigger 16. Force exerted by the piston 26 in the cylinder 12 through the push chain 24 drives extrudable material 23 out of a tube or canister 21, Cyclically actuating the trigger 16 thus dispenses extrudable material 23 using a push chain, instead of an elongated push rod, such as the ones used in prior art dispensers.

Push chains are well known. A push chain is a chain that can be looped or folded for storage but which becomes rigid when subjected to a compressive or thrust load. Push chains can also be used to exert a tensile force. Push chains can thus be used to push as well as pull. In the figures, the push chain is stored in a magazine adjacent the cylinder 12, looped part way around a driven sprocket and connected to the back side of a piston in the cylinder 12.

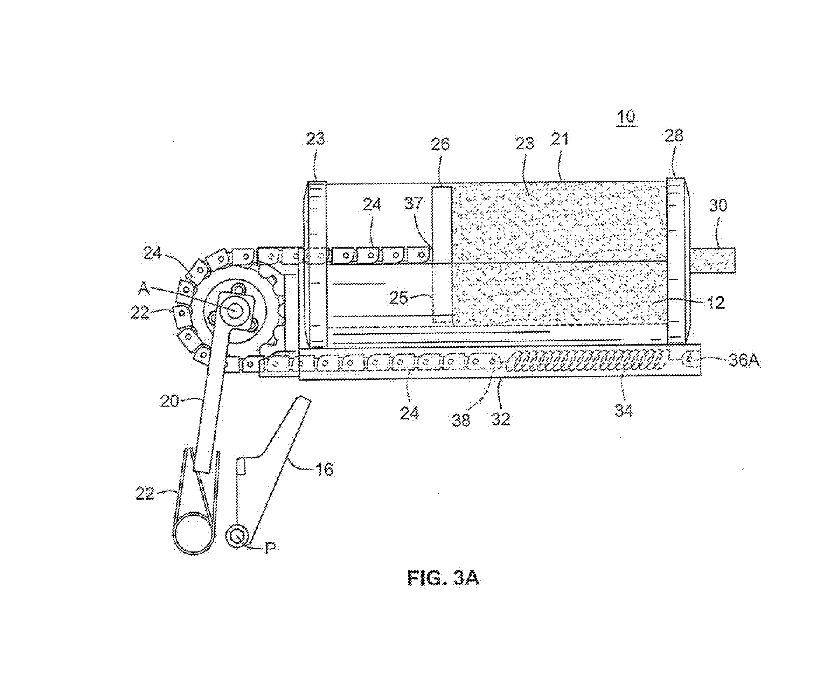

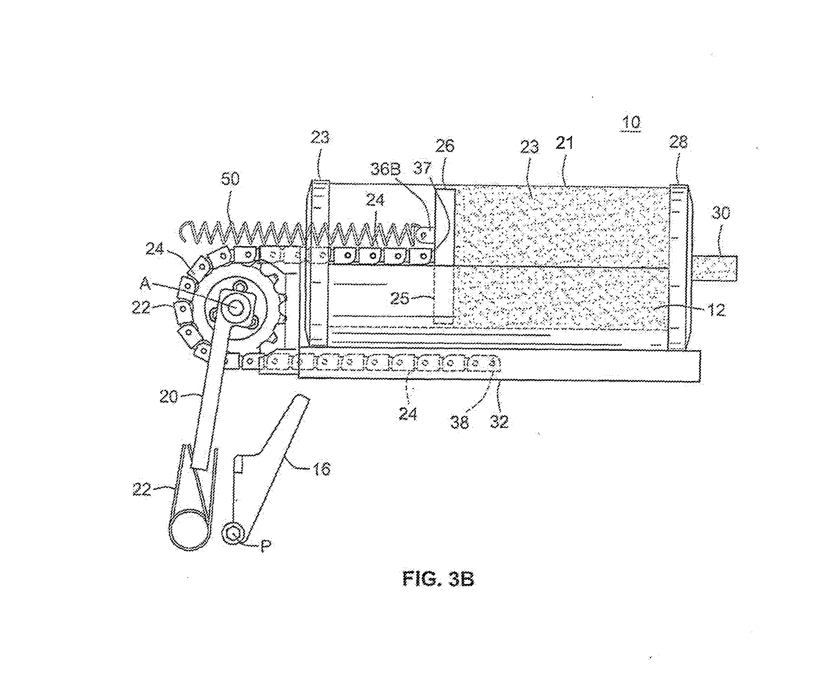

FIG. 3A is a cross-sectional view of the dispenser shown in FIG. 2, as viewed from the right side of the dispenser 10, Squeezing the trigger 16 to force it into the handle 14 causes the trigger 16 to pivot counterclockwise (as shown in FIG. 3) around pivot point P. In so doing, the trigger 16 compresses a trigger return spring 18 and urges a swing arm 20 clockwise around P. The swing arm 20 is attached to the sprocket 22. Rotating the swing arm 20 clockwise around P causes the swing arm 20 to rotate clockwise around the axis A of a sprocket 22.

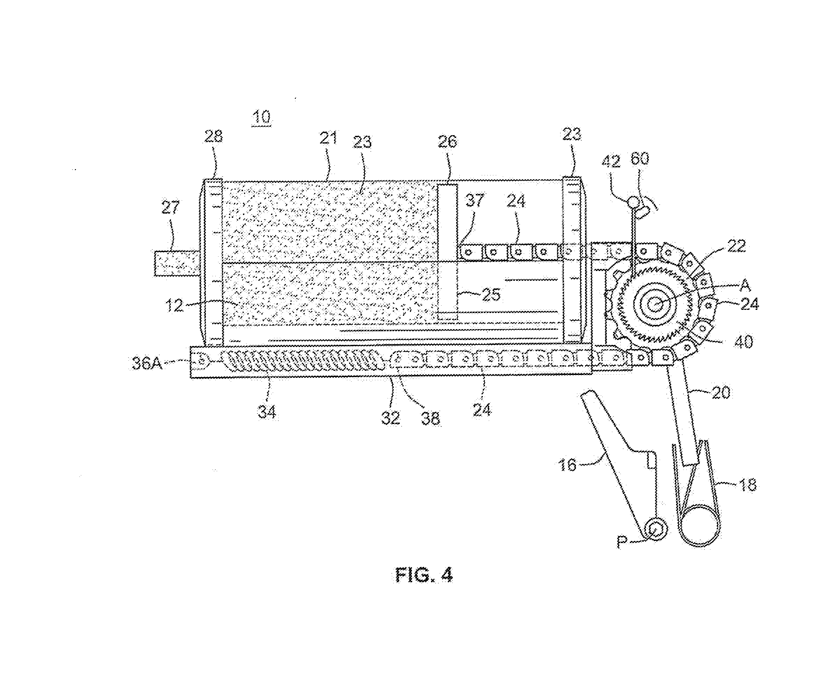

The swing arm 20 is rotatably attached to the sprocket 22 via a one-way bearing, visible in FIG, 7 but not visible in FIG. 3. The one-way bearing is mounted in the handle 14 such that rotation of the swing arm 20 around the sprocket's axis A in a clockwise direction drives the sprocket 22 clockwise, however a releasable ratchet mechanism shown in FIG. 4 prevents the sprocket from rotating counterclockwise, at least until the ratchet mechanism is disengaged from the sprocket 22. When the sprocket 22 is "held in place" by the ratchet mechanism, the one-way bearing permits the swing arm 20 to return to its starting position, as shown in FIG. 3. Once the swing arm 20 returns to its starting location, the trigger 16 can be actuated again, i.e., rotated counterclockwise around P to engage the swing arm 20. Repeated cycling of the trigger 16 thus drives the sprocket 22 incrementally clockwise. The one-way bearing and ratchet mechanism thus enable the sprocket 22 to advance clockwise incrementally but prevent the sprocket 22 from rotating counterclockwise, until the ratchet is released or disengaged from the sprocket 22. Advancing the push chain 24 into the cylinder 12 by rotating the sprocket 22 clockwise with each trigger actuation causes the piston 26 to move incrementally from the proximal end 23 of the cylinder 12 toward the distal end 28, forcing extrudable material 23 out of the tube or canister 21 along the way. Releasing the trigger 16, however, does not reverse the sprocket 22 or pull the push chain 24 out of the cylinder 12.

Still referring to FIG. 3A. the push chain 24 has a first end 37 attached to the center of the back side 25 of the piston 26. The push chain 24 also has a second end 38 inside a chain magazine 32 and attached to a push chain return spring 34.

A "center or middle section of the push chain 24 is wrapped approximately half-way around the chain sprocket 22. A first portion of the chain 24, which is located between the sprocket 22 and first end 37 of the chain 24, extends from the teeth of the sprocket 22 part way into the cylinder 12 to where the first end 37 of the chain is attached to the back side 25 of the piston 26. A second portion of the push chain 24, which is located between the sprocket 22 and second end 38 of the chain 24, extends from the sprocket 22 into a chain magazine 24 that is located immediately below, adjacent to, and parallel to, the cylinder 12. Each actuation of the trigger 16 thus pulls a length of push chain 24 from the magazine 24, stretching the push-chair: return spring 34 and pushes the same amount of chain into the cylinder 12.

A coil-type push chain return spring 34 is tethered to the second end 38 of the spring 24 and the distal end 36 of the magazine 24. The return spring 34 maintains the second part of the push chain 24 in tension as the chain 24 is driven down the cylinder 12 and acts to pull the chain 24 out of the cylinder 1 2 and back into the magazine 24 when the aforementioned ratchet mechanism is released.

FIG. 3B is a cross-sectional view of an alternate embodiment of the dispenser shown in FIG. 2, as viewed from the right side of the dispenser 10. Unlike the embodiment shown in FIG. 3A which uses a push chain return spring 34 in the magazine 32, the embodiment shown in FIG. 3B uses a push chain return spring 50 located inside the handle 14. In yet another alternate embodiment, not shown, both return springs 34 and 50 can be used.

In FIG. 3B, the left end of the return spring 50 (as viewed in FIG. 3B) is attached to a post located inside the handle, which is not shown in FIG. 3B. The right end of the chain 24 (as viewed in FIG. 3B) is attached to an anchor 36B on the back side 25 of the piston 26. Rotating the sprocket 22 clockwise causes the push chain 24 to drive the piston 26 down the cylinder 12 toward the distal end 28 of the cylinder 12. As the piston 26 moves toward the distal end 28 of the cylinder 12, the return spring 50 is stretched, which exerts a compressive force on the first part of the chain, the portion between the sprocket 22 and the piston. Releasing the ratchet mechanism oil the sprocket 22 enables the return spring 50 to pull the piston 26 and chain 24 back toward the sprocket 22, which drives the second end 38 of the chain 24 back into the magazine 32.

FIG.4 is a cut away view of the left side of the dispenser 10 shown in FIG. 2 and FIG. 3B. FIG. 4 shows among other things, a ratchet mechanism that allows the push chain 20 and hence the piston 21 to move in only one direction, i.e., toward the distal end 25 of the cylinder 12, until the ratchet mechanism is disengaged. The ratchet mechanism is comprised of the fine-toothed gear 40 attached to the chain sprocket 22 and a springloaded locking pawl 42. A bottom end 44 of the locking pawl 42 rides over or "follows" teeth in the gear 40. The gear 40 and sprocket 22 are attached to each other. They rotate together, in the same direction, on the aforementioned unidirectional or one-way bearing, which is also not visible in FIG. 4.

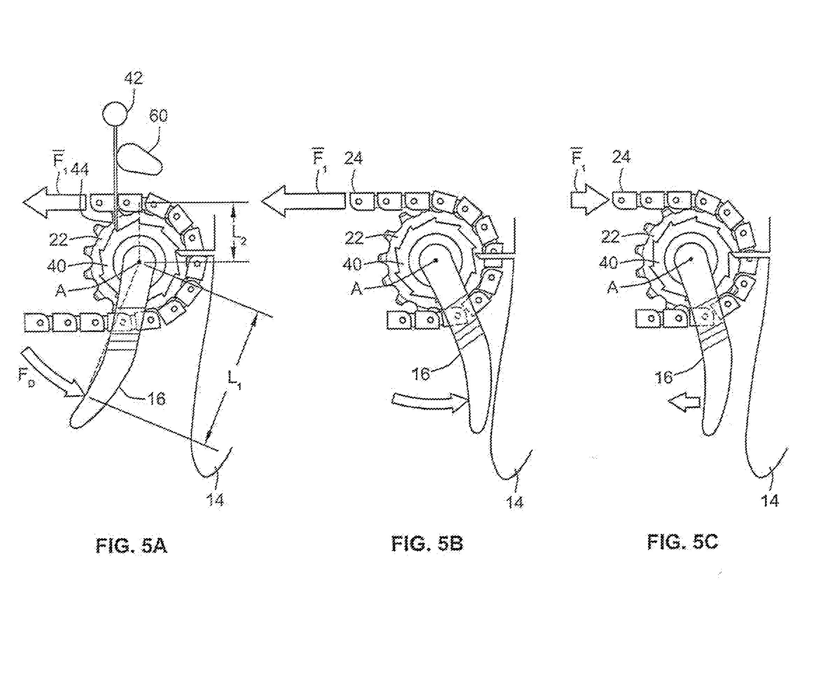

As shown in FIG. 5A, the bottom end 44 of the locking pawl 42 follows teeth on the gear 40 and permits the gear 40 and sprocket 22 to rotate in only one direction, i.e., counterclockwise in FIG. 4 and "away" from the bottom end 44 of the locking pawl 42. The locking pawl 42 is disengaged from the gear 40 by moving the bottom end 44 of the locking pawl 42 away from the gear 40, far enough to allow the bottom end 44 to clear the teeth of the gear 40 and to allow the gear 40 to reverse direction, i.e., rotate clockwise as shown in FIG. 4, counterclockwise as shown in FIG. 3. Rotating the gear 40 and sprocket 22 in a reverse or backward direction retracts the first portion of the push chain 24 from the cylinder 12 and allows the second portion of the push chain to be pulled into the magazine 32 by the push chain return spring 34.

The locking pawl 40 shown in FIG. 4, and its bottom end 44, can be disengaged from the gear 40 by rotating a cam shaft 60 that extends out of the sides of the handle 14. The cam shaft 60 shown in the figure is thus configured to push the bottom end 44 away from the gear 40, if the cam shaft 60 is rotated clockwise or counterclockwise. In an alternate embodiment, a ratchet disengagement mechanism is comprised of a shaft that extends orthogonally out from at least one side of the handle 14. A central part of the shaft inside the handle 14 has an outer diameter that is tapered such that when the shaft is depressed toward or into the handle 14, the taper on the shaft urges the locking pawl 40 sideways, just as the cam 60 would do, and away from the gear 40.

In FIG. 5A, a directed arrow at the bottom of the trigger 16 corresponds to a force $F_0$ exerted on the trigger 16 when a user squeezes the trigger 16 toward or into the handle 14. The force $F_0$ creates a counterclockwise (as shown in FIG. 4; clockwise in FIG. 3) torque on the sprocket 22. The torque created by $F_0$ compresses the trigger return spring 18 at the same time that it urges the sprocket 22 counterclockwise (in FIG. 4). Urging the sprocket 22 counterclockwise impresses a force $F_1$ on the back side 25 of the piston 26. The force $F_1$ exerted on the first part of the chain 24 is thus compressive. The force $F_1$ is applied in a substantially straight line, essentially down, or along, the central axis of the cylinder 12.

In FIG. 5A the directed arrow at the bottom of the trigger 16 depicts a force of magnitude $F_0$ applied to the trigger 16 at a distance $L_1$ from the center of the sprocket 18. That force, acting at a distance $L_1$ from the center of the sprocket 18, creates a torque around the sprocket's axis A, the magnitude of which is expressed as:

$$\Gamma_i = F_0 \times L_1$$

Driving the sprocket 22 counterclockwise (as shown in the figures) by squeezing the trigger 16 thus creates a reaction force $F_1$ in the push chain 24, which is exerted on the piston 26. The reaction force $F_1$ can be calculated by assuming that just before the chain moves in response to squeezing the trigger, the sum of the moments around the axis of the sprocket is zero. The force $F_1$ on the chain 20 will therefore be equal to:

$$F_i = \frac{F_0 \times L_1}{L_2}$$

Since $L_2$ is smaller than $L_1$, the quotient of $L_1$ to $L_2$ will be greater than one. The magnitude of the force $F_1$ exerted on the chain 20 (and hence the piston 21 and extrudable material 23 in a canister) by the force $F_0$ will therefore be proportionately greater than the force $F_0$ exerted by a user on the trigger 16, however, the horizontal or lateral displacement of the chain 24 by the actuation of the trigger 16 will be less than the lateral displacement of the trigger 16. Stated another way, the torque multiplication provided by the longer moment arm $L_1$ vis-a-vis $L_2$, multiplies the force $F_1$ applied to the chain 24, to the piston 26 and to extrudable material 23 in a canister 21 within the dispenser 10 but at a "cost" of a reduced horizontal displacement of the chain 24 in the cylinder 21. The ratio of the length of the torque arms $L_1$ and $L_2$ can thus effectuate both a torque/force multiplication as well as a division of the horizontal displacement. Stated another way, the length of the trigger 16 and the diameter of the sprocket 24 can be selected such that a full actuation of the trigger 16 dispenses a fixed or substantially fixed amount of extrudable material 23 from the canister 21. The dispenser 10 can therefore dispense fixed amounts of extrudable material by the full actuation of the trigger 16.

A "full actuation" of the trigger 16 is considered herein to be the rotation of the trigger 16 about, its pivot point P, to a point where the locking pawl 42 can engage the next notch in the gear 40. The number of notches or teeth on the gear 40 and the length of the trigger 16 thus effectively determine the angle through which the trigger 16 can be rotated and thus determine the maximum amount of material that can be dispensed with each trigger actuation.

FIG. 5B depicts the trigger 16 at the end of its travel around the axis of the sprocket 22. Additional counterclockwise rotation of the sprocket 22 effectuates additional lateral translation of the push chain 24 toward the left-side of the figure, as well as additional compressive force on the chain 24.

In FIG. 5C, the trigger 16 is released. The trigger return spring (not shown in FIGS. 5A-5C) causes the trigger 16 to return to its starting location and reduces the compressive force on the chain 24, In most embodiments, however, a ratchet mechanism holds the sprocket 22 and chain 24 in place, i,e., does not allow the sprocket to reverse direction.

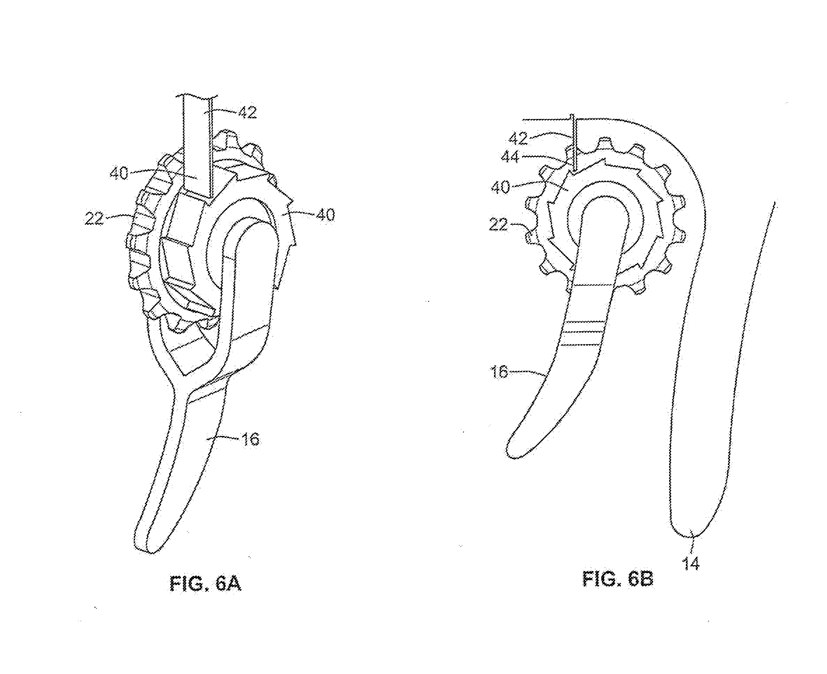

FIG. 6A and 6B are enlarged, isolated views of the releasable ratchet mechanism depicted in FIG. 5A. In these views, the gear 40 is more clearly seen as being permitted to rotate in only one direction until the bottom end 44 of the locking pawl 42 is moved out of engagement with the gear 40.

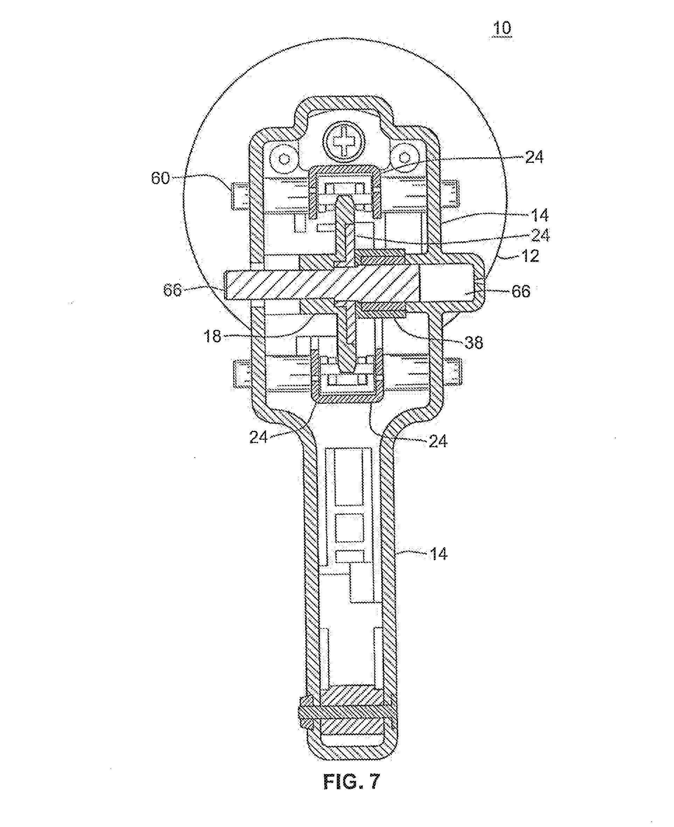

FIG. 7 is an end view as seen from the handle/housing 14, which is cut away to show the interior portions of the handle/housing 14. The sprocket 22 can be seen mounted to and rotating on a one-way bearing 66, the opposite ends of which are supported by the handle/housing 14. The push chain 24 can be seen riding over the sprocket 22.

Those of ordinary skill and in mechanical arts will appreciate from the foregoing figures and description that actuation of the trigger 16 around its pivot point P, causes the sprocket 22 to rotate through an angle of rotation around the sprocket's central axis A. The size of the angle of rotation is determined by the length of the moment arm $L_1$ and the angle through which the trigger 16 can rotate about its pivot point. Since the sprocket 22 is provided with a fixed number of teeth that can engage corresponding links of the chain, rotation of the sprocket by the complete actuation of the trigger causes the piston to move down the cylinder 12 by a fixed and identical distance on each actuation of the trigger. The trigger and its angular actuation thus becomes a measurement device. By controlling the angle through which the trigger rotates, it is therefore possible to control the amount of extrudable material dispensed.

For purposes of claim construction, the push chain 24 is considered herein to be a linear actuator, in the sense that it is capable of exerting a compressive force in a substantially straight line without budding. In a preferred embodiment, the push chain is stored in a magazine shown in the figures as being parallel to and attached alongside the cylinder 12. In an alternate embodiment, the push chain 20 can also be stored into the handle as those of ordinary skill in the art will recognize.

The cylinder, handle, trigger and push chain can be fabricated from metal, plastic or carbon fiber. While the return springs 34 and 50 are preferably metal, an elastic band can be substituted for the return spring 34 or 50.

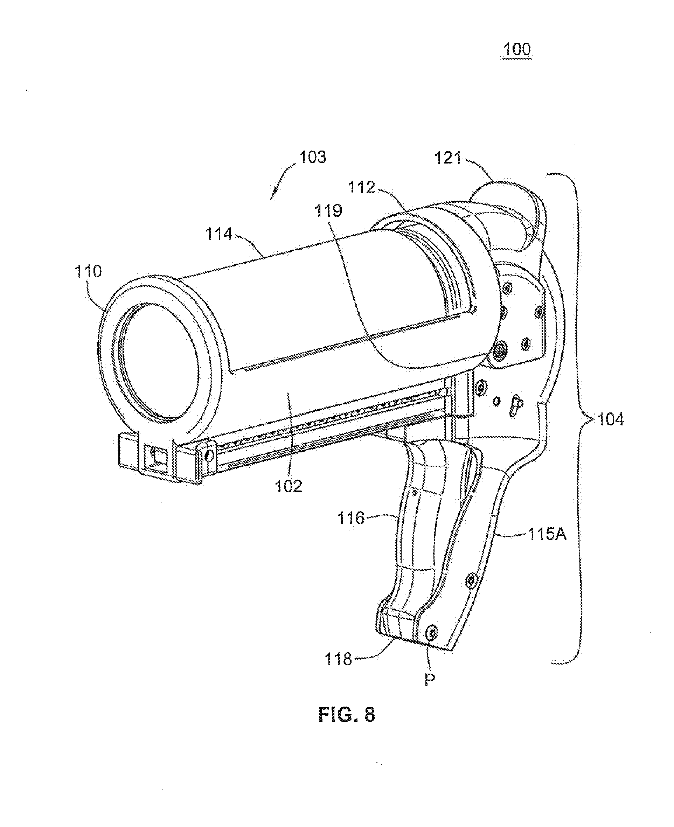

FIG. 8 is a perspective view of a preferred embodiment of a rodless dispenser 100 for extrudable materials and having a contents indicator. As with the rodless extrudable material dispenser 10 described above, the dispenser 100 shown in FIG. 8 is comprised of a substantially cylindrical housing 102, approximately one-half of which is removed, the removed portion having a shape reminiscent of a Quonset hunt, which is a well-known structure having a semicircular arching roof. Despite the fact that approximately half the housing 102 is removed, for brevity, clarity and simplicity, the shape of the housing 102 depicted in FIGS. 8 et seq. is hereinafter referred to interchangeably as simply a housing as well as a cylindrically-shaped housing.

As can be seen in FIG. 8, the housing has an elongated opening 103 through which a disposable tube 114 of extrudable material can be inserted into and removed from the dispenser 100. A handle assembly 104 is attached to a first or proximal end 112 of the housing 102. The opening 103 is sized and arranged to enable the disposable tube 114 to slide through the opening 103 and within the housing 102 between the distal end 110 and the proximal end 112. In the handle assembly 104, a trigger 116 rotates or pivots around a pivot point P, which is located at the bottom or lower end 118 of the handle assembly 104.

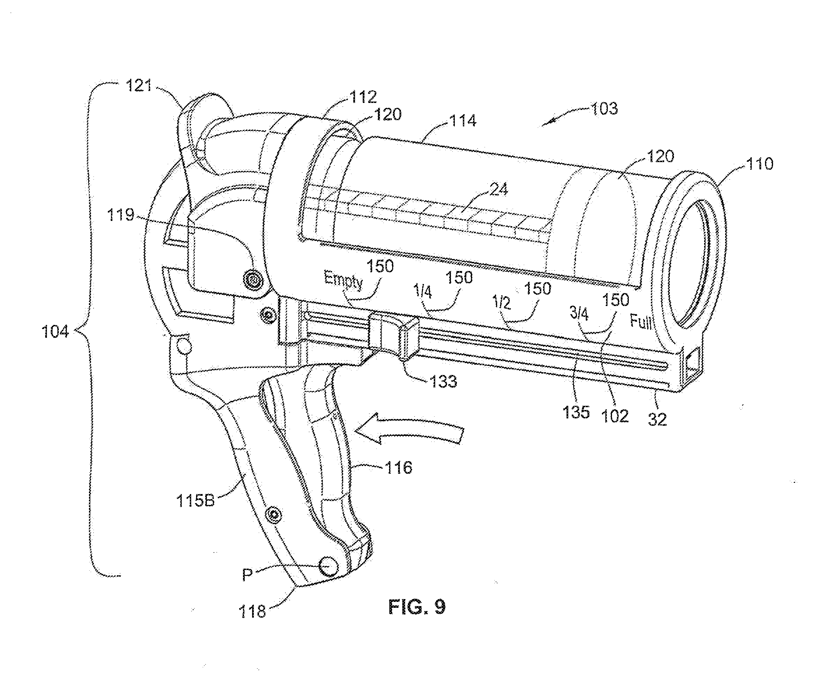

FIG. 9 is a perspective view of the right-hand side of the rodless dispenser 100 depicted in FIG. 8. A translatable piston 120 is driven by a push-chain 24 within a disposable tube 114 of extrudable material In FIG. 9, the piston 120 is shown as being in two locations in order to show that the piston 120 originates from near the proximal end 112 and moves away from the proximal end 112 toward the distal end 110, within the tube 114. As explained above, the piston 120 is driven by a push chain 24 as the push chain 24 is drawn from the chain magazine 32, wrapping around the sprocket 22 inside the handle 104 as it goes.

As the first end 37 of the push chain 24 is driven further into the tube 114, the second end 38 of the push chain 34 is pulled from the magazine 32. As the second end 38 moves toward the sprocket 22 inside the handle 104, an indicator/handle 133 attached to the second end 38 of the push chain 24 indicates how much material is left in the tube 114 by markings 150 along the side of the housing 102 and just above the elongated slot 135 formed into one side of the magazine 32. The markings 150 or other indicia are referred to herein after as graticules, regardless of their specific form, however, in one embodiment, the markings are embossments while in another embodiment the markings are part of an appliqué.

In a preferred embodiment, a handle 133 is attached to the push chain 24, proximate to the second end 38 of the push chain 24. The handle 133 extends through the slot 135 and acts as an indicator or pointer, relative to the markings 150.

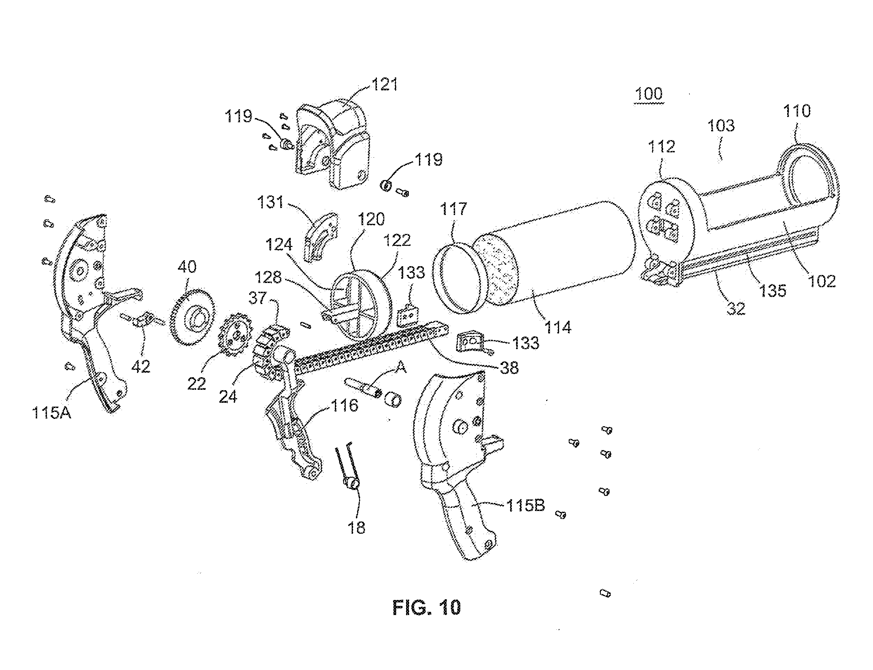

FIG. 10 is an exploded view of the dispenser shown in FIG. 8 and FIG 9. A person of ordinary skill in the art will appreciate that when viewed together, FIG. 9 and FIG. 10 show that as the piston 120 moves away from the sprocket 22 and toward the distal end 110 of the housing 102, the second end 38 of the push chain 24 moves an equivalent distance in the opposite direction, i.e., toward the proximal end 112 of the housing 102. Stated another way, as one end of the chain moves away from the sprocket 22, the opposite end of the chain 24 moves toward the sprocket 22 and vice versa. The chain 24 and its movement thus provides a mechanism for indicating how much material remains by the markings in the housing 102, along the chain's travel, the markings 150 corresponding to the amount of material remaining in a tube 114.

Those of ordinary skill in the art will recognize that in FIG. 9, the indicia are selected to indicate how much material remains inside a tube. In an alternate embodiment, the order of the indicia can be reversed to indicate how much material has been dispensed. A visual comparison of a reference point on the chain 24, such as the handle 136, with one or more indicia 150 on the housing 102 or magazine 32, provide at least an approximate indication of the volume of material dispensed or remaining inside a tube 114.

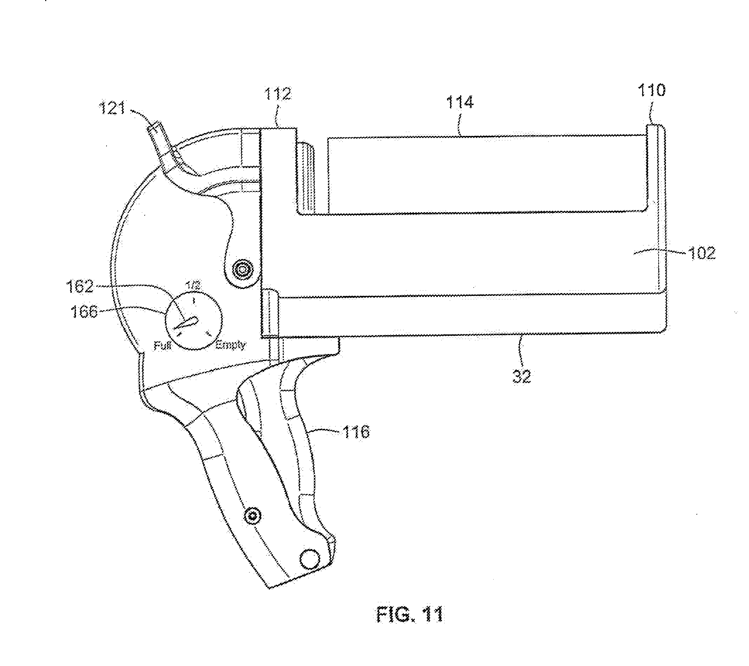

FIG. 11 is a side view of an alternate embodiment of a rodless dispenser for extrudable material and having a contents indicator. In FIG. 11, the contents indicator is embodied as a dial indicator 160 having a needle or pin 162 that rotates on an axle, not visible in the figure. Labels or numeric indicia 150 around the periphery of the indicator 160 are "pointed to" by the needle 162 as the piston 120 moves down the tube 114, dispensing material therein.

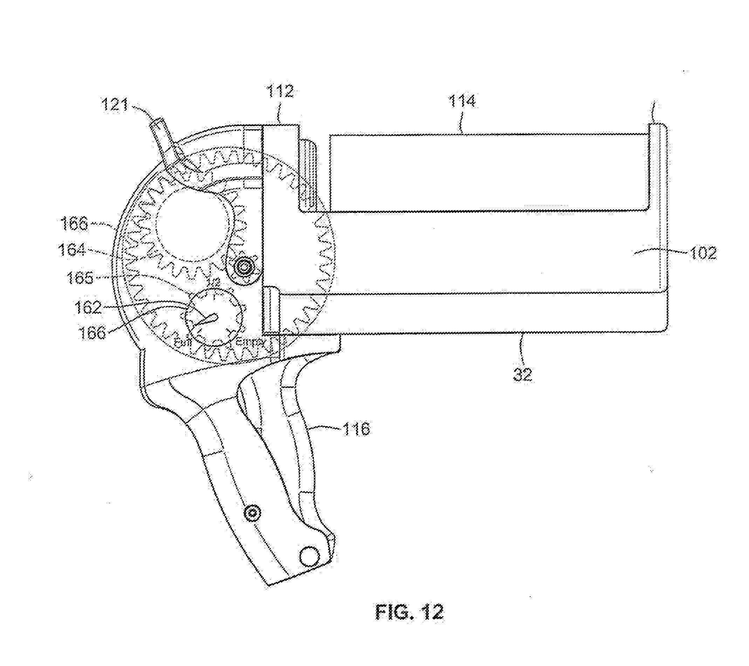

FIG. 12 is a side view of the alternate embodiment shown in FIG. 11 showing a gear train 164, 165 and 166 inside the dispenser 100. The gear train is used to drive the needle 162 around an axis, according to the linear displacement of the chain 24 such that the piston's travel from one end of a tube 114 to the opposite end causes the needle 162 to rotate from the full mark to the empty mark.

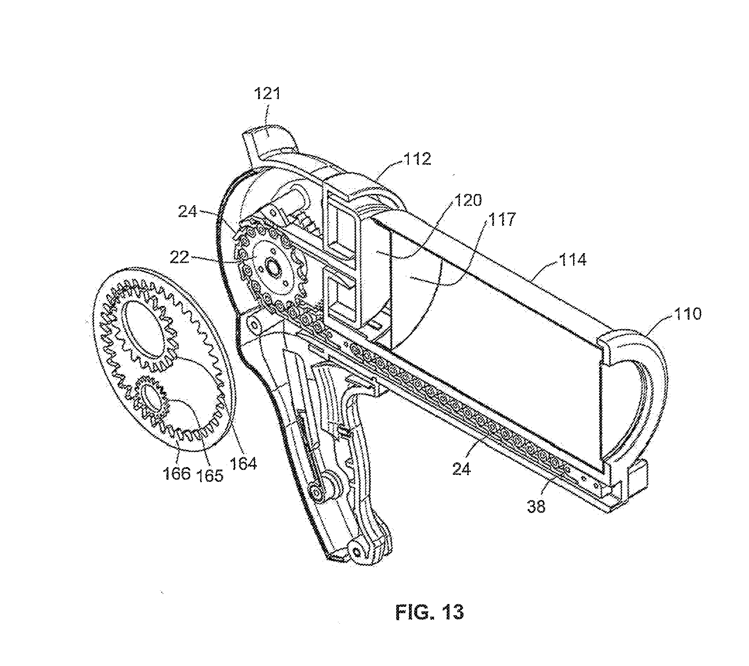

FIG. 13 is a cut-away perspective view of the dispenser shown in FIGS. 11 and 12 and which reveals the structure and configuration of one embodiment of a gear train 164, 165 and 166 used to drive the needle 162 of a dial indicator. In FIG. 13, a first spur gear 164 is attached to and rotates with the sprocket 22. It also drives a second, larger gear 166 such that multiple rotations of the first gear are required to rotate the second gear 166 one revolution. A third gear 165, which is smaller than the second gear, is driven by the second gear. Those of ordinary skill in the art will recognize that the ratios of the diameters of the first, second and third gears are selected such that the linear translation of the piston 120 from one end of a cylinder 114 to the other causes the needle 162 in the dial indicator to rotate between the "full" and "empty" labels on the side of the dispenser.

For the sake of completeness, FIG. 14 is an exploded view of the rodless dispenser 100 depicted in FIGS. 11, 12 and 13. FIG. 14 differs from FIG. 10 in that FIG. 14 includes the aforementioned gear train. Rotation of the sprocket 22 drives the push chain 24 at the same time that the sprocket 22 drives the dial indicator device 160 shown in FIG. 11.

Those of ordinary skill in the art will recognize that while the figures depict two different embodiments of a rodless dispenser for extrudable material having a contents indicator that indicates how much extrudable material remains in the device, alternate embodiments include dispensers that reverse the order of indicia in order to indicate how much material has been dispensed. Those of ordinary skill will also recognize that the elongated slot 135 in the magazine 32 can be filled with a transparent material. A marking on the chain can thus "point" to markings, embossments or an applique to indicate the material remaining or material dispensed.

In one embodiment, the chain magazine 32 is formed as an integral part of the housing 102, such as by way of a molding process. In an alternate embodiment, the push chain magazine 32 is a separate structure that is attached to the housing. And while the magazine 32 depicted in the figures extends alongside the housing 102, in an alternate embodiment, the magazine 32 is not parallel to the housing but is instead part of or alongside the handle 115. In such an embodiment, the direction of the movement of the first end 37 of the chain 24 is not opposite the direction of the movement of the second end 38 of the push chain 24 but moves in a non-parallel direction.

The foregoing description is for purposes of illustration only. The true scope of the invention is defined by the appurtenant claims.

**Claims**

1. A rodless dispenser for extrudable material, the rodless dispenser comprising:

   a housing;
   a translatable piston (piston) within the housing, the piston configured to drive extrudable material from the tube when the piston moves in a first direction;
   a linear actuator magazine (magazine) coupled to the housing;
   a linear actuator (actuator) having first and second ends, the first end operatively coupled to the piston, the second end within the magazine, the actuator configured to drive the piston in said first direction responsive to a force applied to said linear actuator; and
   a visible indicator (indicator) operatively coupled to the actuator and indicating an amount of extrudable material.

2. The rodless dispenser of claim 1, wherein the indicator is configured to indicate an amount of extrudable material remaining in a tube.

3. The rodless dispenser of claim 1, wherein the indicator indicates an amount of extrudable material dispensed from a tube.

4. The rodless dispenser of claim 1, wherein the linear actuator is comprised of a push chain and wherein the magazine is comprised of an elongated slot through a surface of said magazine.

5. The rodless dispenser of claim 1, wherein displacement of the piston in the first direction causes the indicator to move in a second direction.

6. The rodless dispenser of claim 5, wherein the first and second directions are opposite each other.

7. The rodless dispenser of claim 4, wherein the indicator is comprised of a handle operatively coupled to the push chain proximate to the second end of the push chain, the handle extending at least part way through said slot and being graspable by a user.

8. The rodless dispenser of claim 7, wherein the handle is configured to move the push chain second end into the magazine.

9. The rodless dispenser of claim 4, wherein the elongated slot is comprised of a material, through which said indicator is at least partially visible.

10. The rodless dispenser of claim 7, wherein at least one of the housing and the magazine is comprised of indicia on a surface thereof, individual ones of the indicia corresponding to an approximate amount of extrudable material in a replaceable tube of extrudable material in said housing.

11. The rodless dispenser of claim 10, wherein said indicia are comprised of an appliqué.

12. The rodless dispenser of claim 10, wherein said indicia are comprised of embossments.

13. The rodless dispenser of claim 1, wherein the magazine is formed to be an integral part of said housing.

14. The rodless dispenser of claim 13, wherein the magazine is elongated and substantially parallel to said housing.

15. The rodless dispenser of claim 1, further comprised of a housing and a sprocket. inside said housing, the sprocket rotating around an axis responsive to displacement of the actuator.

16. The rodless dispenser of claim 16, wherein said indicator is comprised of a rotating pointer, operatively coupled to the sprocket and rotating around an axis in response to rotation of said sprocket.

17. The rodless dispenser of claim 17, wherein the axis is substantially orthogonal to said first direction.

18. The rodless dispenser of claim 17, further comprised of indicia on said housing and distributed around an arc, through which said rotating indicator rotates,

19. The rodless dispenser of claim 17, wherein the indicator and indicia indicate an amount of extrudable material remaining in a tube.

20. The rodless dispenser of claim 17, wherein the indicator and indicia indicate an amount of extrudable material dispensed from a tube.

21. The rodless dispenser of claim 17, wherein the rotating indicator and sprocket are operatively coupled to each other and rotate around the same axis.

**FIG. 1**
(PRIOR ART)

**FIG. 2**

FIG. 3A

FIG. 3B

FIG. 4

EP 2 353 734 A2

FIG. 5A                    FIG. 5B                    FIG. 5C

FIG. 6B

FIG. 6A

FIG. 7

FIG. 8

FIG. 9

**FIG. 10**

EP 2 353 734 A2

FIG. 11

EP 2 353 734 A2

FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 68459710 A